(19) Europäisches Patentamt
European Patent Office
Office européen des brevets

(11) EP 0 364 986 B1

(12) **EUROPEAN PATENT SPECIFICATION**

(45) Date of publication and mention
of the grant of the patent:
**02.01.1997 Bulletin 1997/01**

(51) Int Cl.⁶: **G11B 5/008**, G11B 5/53,
G11B 5/09, G11B 15/18
// H04N5/7826, G11B5/592

(21) Application number: **89119348.4**

(22) Date of filing: **18.10.1989**

(54) **Apparatus for reproducing video and audio signals**

Video- und Audiosignalwiedergabegerät

Appareil de réproduction de signaux vidéo et audio

(84) Designated Contracting States:
**DE FR GB**

(30) Priority: **18.10.1988 JP 261860/88**

(43) Date of publication of application:
**25.04.1990 Bulletin 1990/17**

(73) Proprietor: **SONY CORPORATION**
**Tokyo (JP)**

(72) Inventor: **Koga, Hirohisa**
**Shinagawa-ku Tokyo (JP)**

(74) Representative:
**Mitscherlich, Hans, Dipl.-Ing. et al**
**Patentanwälte Mitscherlich & Partner**
**Postfach 33 06 09**
**80066 München (DE)**

(56) References cited:
**EP-A- 0 177 231**

• **PATENT ABSTRACTS OF JAPAN, vol. 12, no.
104 (P-685)[2951], 6th April 1988;& JP- A-62 236
104 (SONY CORP.) 16-10-1987**
• **S.M.P.T.E. JOURNAL, vol. 96, no. 10, October
1987, pages 949-959, White Plains, NY, US; C.
CHAN et al.: "Product implementation of the
4:2:2 component digitalformat"**
• **S. GREGORY: "Introduction to the 4:2:2 digital
video tape recorder", 1988,**
• **Pentech Press, London, GB**
• **PATENT ABSTRACTS OF JAPAN, vol. 10, no.
352 (E-458)[2408], 27th November 1986;&
JP-A-61 150 476 (SONY CORP.) 09-07-1986**

## Description

The present invention relates generally to apparatus for reproducing video and audio signals and more particularly to an apparatus for reproducing video and audio signals which is suitable for application to a digital video tape recorder (VTR).

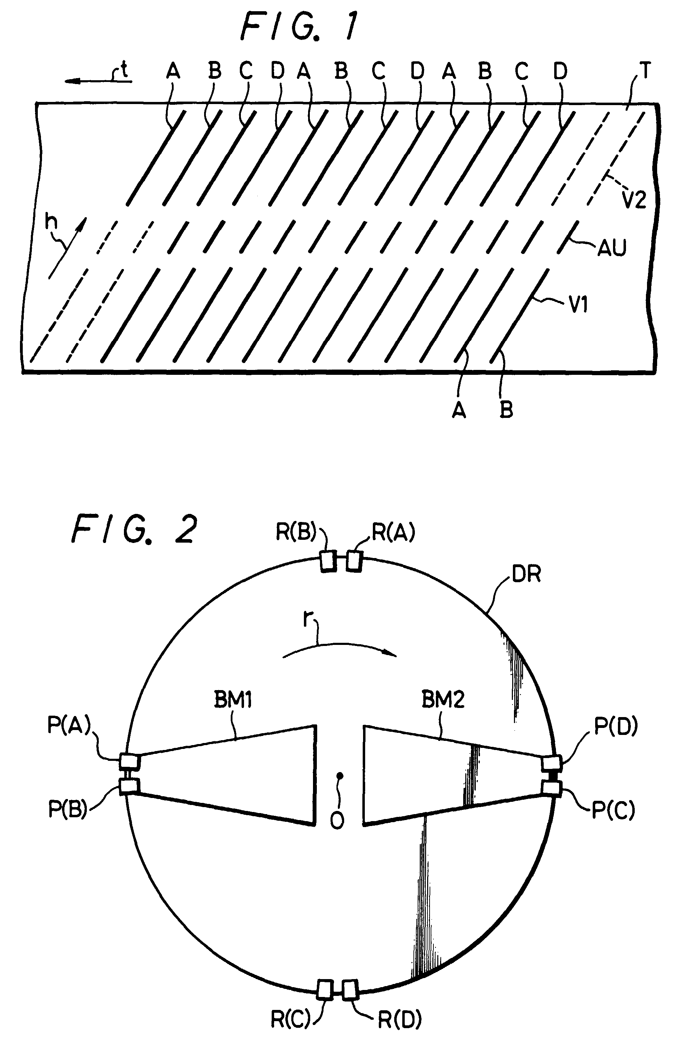

Fig. 1 is a diagrammatic view of a section of a magnetic tape, and illustrating record tracks thereon according to SMPTE "D-1" format of a conventional 4 : 2 : 2 component digital video tape recorder. According to the SMPTE "D-1" format, upon recording, digital video and audio signals are recorded on a magnetic tape by two pairs of record rotary magnetic heads mounted on a tape guide drum with an angular extent of 180 degrees so that as shown in Fig. 1, in the case of 626/50-system, twelve slant tracks (ten slant tracks in the case of 525/60-system) are formed on the magnetic tape. Upon reproduction, the digital video signal (formed of a digital luminance signal and digital red and blue difference chrominance signals) and digital audio signal thus recorded on the magnetic tape are reproduced from the magnetic tape by two pairs of reproducing rotary magnetic heads mounted on the tape guide drum with an angular extent of 180 degrees. In Fig. 1, $\underline{t}$ represents the direction in which the magnetic tape is transported and $\underline{h}$ the direction in which the rotary magnetic head scans the magnetic tape ("Introduction to the 4 : 2 : 2 Digital Video Tape Recorder" published by Pentech Press Limited, London in 1988 reported the details of 4 : 2 : 2 digital video tape recorder, including its tape format and arrangements of record and reproduce heads on a rotary drum).

In Fig. 1, reference letters A, B, C and D represent slant tracks formed on a magnetic tape $\underline{T}$ when two pairs of recording rotary magnetic heads scan the magnetic tape $\underline{T}$. One pair of record rotary magnetic heads, provided close to each other, form the slant tracks A and B simultaneously, and the other pair of record rotary magnetic heads, provided close to each other, form the slant tracks C and D simultaneously. Each slant track is comprised of front and rear video segments V1 and V2 and an intermediate audio segment AU therebetween. A time code signal for the digital video signal is also recorded on the audio segment AU together with the digital audio signal.

In Fig. 1, solid line portions represent recorded locus of one field digital video signal from the rear video segments V2 of the first and second slant tracks A and B from left to the front video segments V1 and audio segments AU of 13th and 14th slant tracks A and B from left.

In such digital video tape recorder, let us consider that the digital video signal recorded on the magnetic tape $\underline{T}$ is reproduced in the variable tape speed playback mode in which the tape transport speed in the reproducing mode is made different from that of the recording mode.

Prior to discussing the variable tape speed playback mode of the digital video tape recorder, let us first consider that a conventional analog VTR (type C-format analog VTR (model BVH-2000)) performs the playback in which the tape transport speed in the reproduction mode is made different from that of the recording mode. The reproducing rotary magnetic head scans the magnetic tape $\underline{T}$ to intersect a plurality of slant tracks so that, when a reproduced signal is received and reproduced on a monitor receiver, several horizontal band-shaped noises are produced on the reproduced picture.

In order to perform the variable tape speed playback without noise component, the prior-art analog video tape recorder mounts a reproducing rotary magnetic head on a movable device such as a bimorph leaf plate so that the reproducing rotary magnetic head can be displaced in the direction across the slant track. Thus, the reproducing rotary magnetic head can scan the slant tracks on the magnetic tape $\underline{T}$ in a properly-tracked condition.

Other prior-art techniques, for example, U.S. Patent No. 4,549,235 disclose the above-noted techniques. Accordingly, applying the similar technique to the 4 : 2 : 2 digital video tape recorder, it is possible to obtain a video signal having no noise component. The digital video tape recorder and the prior art analog video tape recorder are, however, different in construction, in particular, they are different in arrangement of drum and reproducing head due to different tape formats so that, when the above-noted technique is applied to the digital video tape recorder, there are then presented various problems. These problems will be described in detail hereinafter.

Fig. 2 is a schematic view of an example of a rotary heads in a conventional 4 : 2 : 2 digital video tape recorder. As shown in Fig. 2, in the conventional 4 : 2 : 2 digital video tape recorder, reproducing magnetic heads P(A), P(B) and P(C), P(D) are respectively mounted on bimorph leaf plates BM1 and BM2 which are mounted on a rotary drum RD with an angular extent of 180 degrees. Two pairs of recording heads R(A), R(B) and R(C), R(D) are also mounted on the rotary drum RD, each pair having an angular extent of 180 degrees. These heads are rotated in the direction shown by an arrow $\underline{r}$ in Fig. 2. Let us consider that the playback in twice normal tape speed mode is performed by the above conventional 4 : 2 : 2 digital video tape recorder.

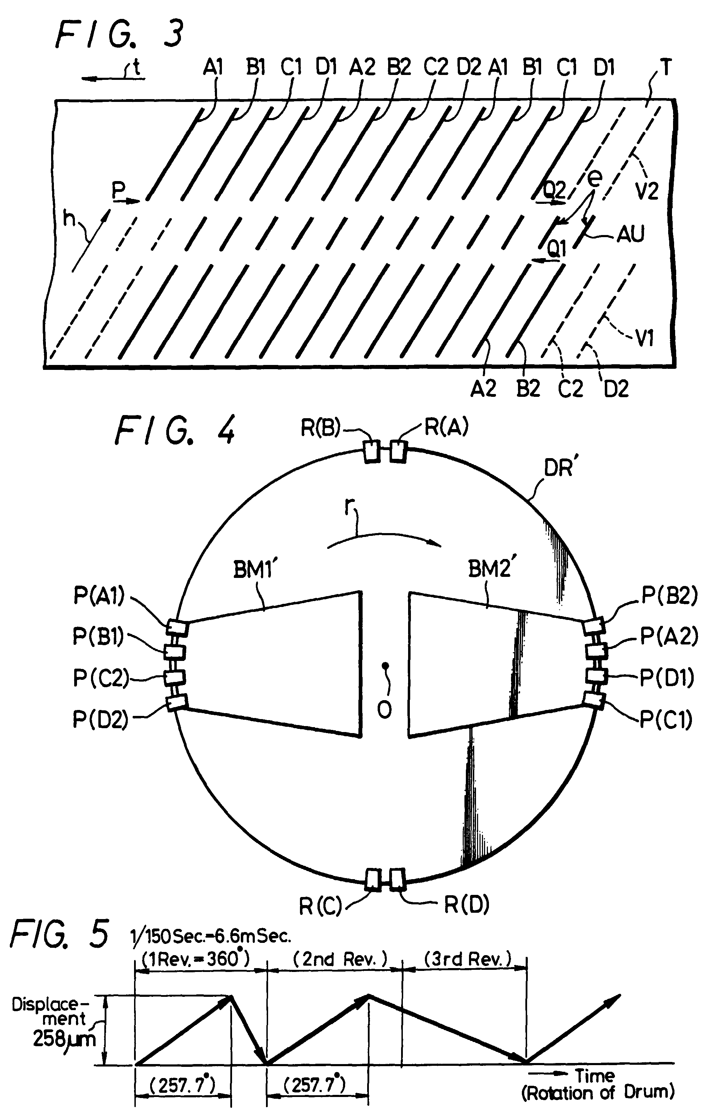

A PAL television signal of one field is recorded on the magnetic tape $\underline{T}$ by twelve tracks as shown in Fig. 3. In the PAL television system, one field video signal is scanned during 1/50 second so that the rotary drum DR with the recording and reproducing heads mounted as shown in Fig. 2 is rotated at 1/50 ÷ 3 = 1/150 second because the recording and reproducing heads have to scan twelve tracks within three times of rotation of the rotary drum. In other words, revolution speed of 150 r. p.s. = 9000 r.p.m. is required. The track pitch in the tape format according to the standardized 4 : 2 : 2 digital video tape recorder, i.e. the pitch between the first track A1 from left and adjacent track B1 is 45 micrometers in Fig. 3. One field is formed of twelve tracks, and calculating the track pitch in the unit of one field yields 45 x 12 = 540 micrometers. In the twice normal tape speed playback mode, the magnetic tape is transported at twice tape speed, whereby the playback head P(A) begins to scan the slant track from a point P and finishes scanning the first track A1, the fifth track A2, the ninth track A1 and the thirteenth track A2 to a point Q1 without mistracking owing to the displacement of the bimorph leaf plate BM1. The displacement amount of bimorph leaf plate BM1 is presented as $45 \times 12 \times \frac{257.7}{360} = 387$ micrometers where 257.7 is the angle at which the magnetic tape $\underline{T}$ is wrapped around the rotary drum DR.

In the still playback mode, the bimorph leaf plate BM1 is displaced by 387 micrometers in the direction opposite to the direction of the twice normal tape speed playback mode so that it must be displaced by the maximum amount of 387 x 2 = 774 micrometers in a peak-to-peak level. The displacement amount of 774 micrometers is the limit which the bimorph leaf plate of size to be mounted on the rotary drum achieves, and this displacement amount can not be realized without difficulty.

Further, after the slant tracks from point P to point Q1 are reproduced, successive twelve slant tracks from the slant track A1 at the point Q2 are skipped, and then the scanning is started from the slant track corresponding to the succeeding point P, whereby the audio track AU (shown by $\underline{e}$ in Fig. 3) is not reproduced. According to the 4 : 2 : 2 component digital VTR, a time code signal indicating the tape position is recorded on the audio track AU together with the audio signal so that, when the video signal track jump is performed at the audio track as set forth above, the time code signal can not be read. Therefore, in order to read the time code signal within one field period, the revolution rate of the rotary drum must be increased. Considering the format of the 4 : 2 : 2 component digital VTR, the increase of the revolution rate is about 20 %, which provides rotation speed of 9000 x 1.2 = 10800 r.p.m. = 175 r.p.s. While the bimorph leaf plate is applied with a centrifugal force of about 3000 G when the rotary drum is rotated at 9000 r.p.m., the increase of rotation speed by 20 % provides a centrifugal force of $3000 \times 1.2^2 = 4200$ G. Accordingly, it is to be noted that the bimorph leave plate applied with such a large gravity force can not be displaced with a displacement amount of 645 (774 - 1.2 = 645) micrometers in peak-to-peak level in practice.

Further, in the 1.9 times normal tape speed playback mode, the playback head is gradually displaced from the track, whereby the displaced position of the playback head P(A) when scanning the starting portion of the digital video signal of one field period is additively changed by the amount of 45 x 12 = 540 micrometers at maximum. Consequently, the maximum deviated amount (displacement amount) of the bimorph leaf plate BM1 reaches to 322 + 540 = 862 micrometers which can not be realized by the standard bimorph leaf plate.

In the reverse playback mode with variable tape speed, the still playback becomes difficult. For this kind of reverse playback mode with variable tape speed, Japanese Laid-Open Patent Gazette No. 61-150476 discloses some technical improvement for reducing the displacement amount of the bimorph leaf plate. Therefore, one with ordinary skill in the art can understand with ease that, if the present invention described later is applied to the technical improvement disclosed in Japanese Laid-Open Patent Gazette No. 61-150476, the reverse playback in a wider tape speed range will be made possible.

On the other hand, instead of the proposal in which the reproducing rotary magnetic head is displaced by the head displacing device, it is proposed to increase the number of reproducing rotary magnetic heads by twice the number of those in the prior art. That is, 8 reproducing rotary magnetic heads are provided. For example, assuming that a reproducing rotary magnetic head can reproduce a digital video signal recorded on the slant track until it is displaced from the slant track by the displacement amount corresponding to half of the track pitch of 45 micrometers at minimum in peak-to-peak level, i.e. 22.5 micrometers, then a noise-less variable tape speed playback would be performed in a range of tape transport speed in which the transport speed of the magnetic tape in the playback mode lies in a range of - 1 to + 1 multiples of the tape transport speed of the recording mode. If such tape speed range is expanded, it will become necessary to increase the number of reproducing rotary magnetic heads more. This causes the rotary magnetic head assembly to become large in size, which is not advantageous in practice.

From "SMPTE Journal, vol. 96, no. 10, October 87, pages 949-959" an apparatus for reproducing video and audio signals is known. Said apparatus comprises a rotary drum and first transducing means mounted on said rotary drum for recording the video and audio signals in a digital form on said tape. The first transducing means includes two pairs of recording head means which pairs are mounted at an opposed position to each other on said rotary drum. Further, the known apparatus comprises a pair of bimorph leaves each of which is mounted at an opposed position on said rotary drum and second transducing means mounted on said pair of bimorph leaves for scanning said parallel tracks. The second transducing means include an even number of pairs of reproducing heads, mounted on said bimorph leaves so that said pairs of reproducing heads can be deflected by said pair of bimorph leaves in a direction transverse to the direction along the tracks.

Moreover, the number of said pairs of reproducing heads is larger than the number of pairs of recording heads.

It is the object of the present invention to provide an apparatus for reproducing video and audio signals in which a deplacement amount of a reproducing head by a head displacing device can be reduced.

The object is solved by the features of claim 1.

Further developments of the invention are defined by claims 2 to 7.

The above, features and advantages of the present invention will be apparent in the following detailed description of a preferred embodiment when read in conjunction with the accompanying drawings, in which the same reference numerals are used to identify the same or similar parts in the several views. In the drawings:

Fig. 1 is a diagrammatic view of a section of magnetic tape, and illustrating record tracks thereon in which video and audio signals are recorded in accordance with a "D-1" format of SMPTE type 4 : 2 : 2 component digital video tape recorder;

Fig. 2 is a schematic view of a rotary magnetic head assembly of a 4 : 2 : 2 digital video tape recorder according to the prior art;

Fig. 3 is a diagrammatic view of a section of magnetic tape, and to which reference will be made in explaining an operation of the prior-art 4 : 2 : 2 digital video tape recorder of Fig. 2;

Fig. 4 is a schematic view of a rotary head assembly of a digital video tape recorder which is of a type to which the present invention can be advatangeously applied; and

Fig. 5 is a schematic representation to which reference will be made in explaining how a displacement amount of a bimorph leaf plate is changed.

An apparatus for reproducing video and audio signals according to an embodiment of the present invention will hereinafter be described with reference to Fig. 4. In this embodiment, the present invention is applied to the 4 : 2 : 2 component digital video tape recorder according to the SMPTE "D-1" format.

Fig. 4 illustrates a rotary magnetic head assembly of the digital video tape recorder according to this embodiment. In Fig. 4, like parts corresponding to those of Fig. 2 are marked with the same references and therefore need not be described in detail.

Unlike the prior art rotary magnetic head assembly in which 4 reproducing rotary magnetic heads are mounted, 8 reproducing rotary magnetic heads are mounted on the rotary magnetic head assembly which is provided between lower and upper stationary drums (not shown) as shown in Fig. 4. In Fig. 4, it will be seen that two sets of four reproducing rotary magnetic heads P(A1), P(B1), P(C2), P(D2); and P(C1), P(D1), P(A2), P(B2) are provided on a pair of displacing devices such as bimorph leaf plates BM1 and BM2 mounted on a rotary head drum DR with an angular extent of 180 degrees in the direction opposite to the rotation direction r of the rotary magnetic heads, arranged in that order. Further, referring to Fig. 4, two pairs of recording rotary magnetic heads R(A), R(B); and R(C), R(D) are also mounted on the rotary drum DR with an angular extent of 180 degrees.

The heights of the respective reproducing magnetic heads are determined so that, when the magnetic tape in which, as shown in Fig. 3, a digital video signal is recorded so as to form slant tracks according to the SMPTE "D-1" format of the 4 : 2 : 2 component digital video tape recorder is reproduced at tape transport speed the same as that of the recording mode, or when the standard tape speed playback (one-multiple speed playback) is performed, during the first half rotation of the magnetic head, the reproducing rotary magnetic heads P(A1), P(B1), P(C2) and P(D2) may scan the slant tracks A1, B1, C1 and D1 simultaneously, while during the next half rotation of the magnetic head, the reproducing rotary magnetic heads P(C1), P(D1), P(A2) and P(B2) may scan the slant tracks C1, D1, A2 and B2 simultaneously.

In the digital video tape recorder, when data with the same address are reproduced a plurality of times, true data takes a priority over false data. Therefore, when an error occurs due to apparatus noise other than a drop-out in the reproduction mode, if the data with the same address is reproduced twice, this will improve an error rate.

Let it be assumed that a twice normal tape speed playback is performed by the digital video tape recorder having the rotary magnetic head assembly shown in Fig. 4. In this case, the revolution rate of the rotary magnetic head in the variable tape speed playback mode is selected to be a standard revolution rate, i.e. 9000 r.p.m. (= 150 Hz). In this case, a tape wrapping angle in which the magnetic head is wrapped around the rotary magnetic head, i.e. tape guide drum DR is 257.7 degrees.

In the variable tape speed playback mode, the reproducing rotary magnetic heads P(A1), P(B1), P(C2), P(D2); and P(C1), P(D1), P(A2), P(B2) can be displaced in the direction across the slant tracks (i.e. in the direction at a right angle to the slant tracks) by the bimorph leaf plates BM1 and BM2, whereby in one rotation of the rotary magnetic heads, 8 successive slant tracks A1, B1, C1, D1, A2, B2, C2 and D2 can be scanned. Accordingly, if the rotary magnetic heads are rotated twice, it will be possible to reproduce the digital video signal of one field period.

Since the revolution rate of the rotary magnetic head is 9000 r.p.m. i.e 150 Hz similarly to that of the prior art as described above, the rotary magnetic head is rotated three times during one field period, i.e. period of 1/50 second. Therefore, it is to be understood that the rotary magnetic head is given an extra time corresponding to one revolution thereof during one field period.

The following operation of the reproducing rotary magnetic heads in the case of twice normal tape speed playback mode will be described with reference to Fig. 5. More specifically, in the twice normal tape speed playback mode, the reproducing rotary magnetic heads P(A1), P(B1), P(C2), P(D2); and P(C1), P(D1), P(A2), P(B2) are displaced by the bimorph leaf plates BM1 and BM2 in the direction across the slant tracks, i.e. in the direction perpendicular to the slant tracks so as to scan the slant tracks, respectively.

In a first one rotation of the rotary head drum DR, during the first half revolution of the rotary head drum DR, the reproducing rotary magnetic heads P(A1), P(B1), P(C2), P(D2) scan simultaneously the first to fourth slant tracks A1, B1, C1 and D1 from left of Fig. 3. Then, during the next half rotation of the rotary head drum DR, the reproducing rotary magnetic heads P(C1), P(D1), P(A2) and P(B2) simultaneously scan fifth to eighth slant tracks A2, B2, C2 and D2 from left of Fig. 3.

In the next one rotation of the the rotary head drum DR, the reproducing rotary magnetic heads P(A1), P(B1), P(C2) and P(D2) simultaneously scan ninth to twelfth slant tracks A1, B1, C1 and D1 from left of Fig. 3, while the reproducing rotary magnetic heads P(C1), P(D1), P(A2) and P(B2) simultaneously scan the thirteenth to sixteenth slant tracks A2, B2, C2 and D2 from left of Fig. 3.

In other words, when the rotary head drum DR is rotated twice during 2/3 field period, the reproducing rotary magnetic heads P(A1), P(B1), P(C2), P(D2); and P(C1), P(D1), P(A2), P(B2) scan 16 slant tracks, so that during such rotations, one field period of the digital video signal (digital luminance signal and digital red and blue chrominance difference signals) can be reproduced.

Fig. 5 illustrates a change of a displacement amount of the bimorph leaf plate BM1. As shown in Fig. 5, this change of displacement amount is presented as a triangular wave whose one cycle corresponds to one rotation time (6.6 milliseconds) of the rotary head drum DR.

On the other hand, when the rotary head drum DR is rotated one time, the magnetic tape is transported by the transport amount corresponding to 8 slant tracks [= 12 x 2 x (1/3) slant tracks) during one rotation of the rotary head drum DR. Accordingly, during one rotation of the rotary head drum DR, the reproducing rotary magnetic heads P(A1), P(B1), P(C2) and P(D2) scan the first to fourth slant tracks A1, B1, C1 and D1 from left of Fig. 3 in a properly-tracked condition, and then, they scan the starting portion of the ninth to twelfth slant tracks A1, B1, C1 and D1 from left of Fig. 3. Therefore, while the reproducing rotary magnetic heads P(A1), P(B1), P(C2) and P(D2) are rotated by 257.7 degrees, the reproducing rotary magnetic heads P(A1), P(B1), P(C2) and P(D2) are displaced by the bimorph leaf plate BM1 by a displacement amount of 0 micrometer to 8 x (257.7°/360°) = 5.7 track amounts. Since the track pitch of the digital VTR of this embodiment is selected to be 45 micrometers, the displaced amount of the bimorph leaf plate BM1 is 45 x 5.7 = 258 micrometers. Thereafter, during the rotation of 360° - 257.7°, the displacement amount of the reproducing rotary magnetic heads P(A1), P(B1), P(C2) and P(D2) is returned to zero micrometer.

When the rotary head drum DR is rotated one time next, the magnetic tape is transported by the transport amount corresponding to 8 slant tracks [= 12 x 2 x (1/3) slant tracks] during this period of time of one rotation. Accordingly, during this one rotation of the rotary head drum DR, the reproducing rotary magnetic heads P(A1), P(B1), P(C2) and P(D2) scan the ninth to twelfth slant tracks from left of Fig. 3 in a properly-tracked condition, and then they reach the starting portion of the seventeenth to twentith slant tracks A1, B1, C1 and D1 from left of Fig. 3. Thus, during the time period when the reproducing rotary magnetic heads P(A1), P(B1), P(C2) amd P(D2) are rotated by 257.7 degrees, the reproducing rotary magnetic heads P(A1), P(B1), P(C2) and P(D2) are displaced by the bimorph leaf plate BM1 by the displacement amount of 0 micrometer to 8 x (257.7°/360°) = 5.7 track amounts, i.e. 258 micrometers. In the next one rotation of the rotary head drum RD, however, the reproducing rotary magnetic heads P(A1), P(B1), P(C2) and P(D2) need not reproducing the digital video signal by scanning the slant tracks. Therefore, during the rotation of 360° + (360° - 257.7°), the displacement amount of the reproducing rotary magnetic heads P(A1), P(B1), P(C2) and P(D2) should be gradually returned to zero micrometer.

The change of the displacement amount of the bimorph leaf plate BM2 on which the reproducing rotary magnetic heads P(C1), P(D1), P(A2) and P(B2) are mounted is equal to the waveform shown in Fig. 5 except for that the phase is different only by 3.3 milliseconds, i.e. 180 degrees.

If the multiple number of the variable tape speed playback has a fraction such as 1.9 times, the maximum displacement amount of the bimorph leaf plate will be provided by adding 180 micrometers (45 micrometers x 4) to 258 micrometers.

Further, in the case of three times normal speed playback mode, the maximum displacement amount of bimorph leaf plate becomes 750 micrometers.

Therefore, according to the digital video tape recorder of this embodiment, the number of the reproducing rotary magnetic heads is increased from four to eight so that, even when the standard bimorph leaf plate is employed as the head moving device (displacing device), - 1 to + 3 times normal tape speed playback can be effected.

When the number of the reproducing rotary magnetic heads is increased from four to eight and these eight reproducing rotary magnetic heads are mounted on the moving devices (displacing devices), the storage capacity of memory has to be increased as compared with the case of four reproducing rotary magnetic heads. According to this embodiment, as compared with a case where the number of reproducing rotary magnetic heads is increased and these increased reproducing rotary magnetic heads are not mounted on the displacing devices, the degree in which the storage capacity of memory should be increased is low.

Since the increase of the number of the reproducing rotary magnetic heads is about twice there is then no risk that the rotary magnetic head assembly will become complicated in arrangement.

Further, according to the present invention, since the reproducing rotary magnetic heads scan twice the slant tracks on the magnetic tape in the standard playback mode, it is possible to considerably improve a random error rate.

Further, since the revolution rate of the rotary head drum need not be increased, it is not necessary to take the defects, caused by the increase of centrifugal force, into consideration.

Furthermore, when the digital video signal of one field period is reproduced in the variable tape speed playback mode, a period of time necessary for such playback is shorter than one filed period, thus making it possible to decrease the speed at which the displacement of the bimorph leaf plate is changed. In association with therewith, when a variable tape speed playback is started from a desired position of the magnetic tape, even if the reproducing rotary magnetic heads are distant from the slant tracks to be scanned by these heads, it is sufficient for the reproducing rotary magnetic heads to await the arrival of slant tracks to be scanned while the magnetic tape is transported uselessly.

According to the present invention, as set forth above, it is possible to obtain an apparatus for reproducing video and audio signals of simplified arrangement in which the displacement amount of the displacing device can be reduced, and in which the video signal recorded on the record medium can be reproduced in the variable tape speed playback mode at a variable playback speed of relatively wide range.

Having described a preferred embodiment of the invention in detail with reference to the accompanying drawings, it is to be understood that the present invention is not limited to that precise embodiment and that many changes and modifications could be effected by one skilled in the art within the scope of the claims.

## Claims

1. An apparatus for reproducing video and audio signals recorded digitally in successive parallel tracks (A1, B1, ...) on a record tape (T) while the latter is advanced at a predetermined speed in a direction (t) at an angle to the direction along said tracks (A1, B1, ...), said apparatus comprising:

   (a) a rotary drum (DR);
   (b) first transducing means mounted on said rotary drum (DR) for recording the video and audio signals in a digital form on said record tape (T), said first transducing means including two pairs of recording heads (R(A), R(B); R(C), R(D)) which pairs are mounted at an opposed position to each other on said rotary drum (DR) so that one field signal of the video and audio signals is formed by a plurality of parallel tracks;
   (c) a pair of bimorph leaves (BM1, BM2) each of which is mounted at an opposed position on said rotary drum (DR); and
   (d) second transducing means for scanning said parallel tracks (A1, B1, ...), said second transducing means including an even number of pairs of reproducing heads (P(A1), P(B1); ...), mounted on said bimorph leaves (BM1, BM2), the number of said pairs of reproducing heads (P(A1), P(B1); ...) being larger than the number of pairs of recording heads (R(A), R(B); R(C), R(D)),

**characterized in**

   that a first half of said pairs of reproducing heads (P(A1), P(B1), P(C2), P(D2)) is mounted on one of said bimorph leaves (BM1) and a second half of said pairs of reproducing heads is mounted on the other one of said bimorph leaves (BM2) such that different reproducing heads (P(A1), P(B1), ...) which are mounted on the same bimorph leaf scan different parallel tracks (A1, B1, ...), when the tape (t) speed of the reproducing mode is the same of the recording mode,
   all pairs of reproducing heads (P(A1), P(B1); ... ) can be deflected by said pair of bimorph leaves (BM1, BM2) in a direction transverse to the direction (h) along the tracks (A1, B1, ...), when the tape (T) speed of the reproducing mode is different from the same of the recording mode.

2. The apparatus according to claim 1, in which each of said pairs of recording heads includes two recording heads (R(A), R(B); R(C), R(D)).

3. The apparatus according to claims 1 or 2, in which each of said half of said pairs of reproducing heads includes four reproducing heads (P(A1), ... P(D2); P(C1), ... P(B2)).

4. The apparatus according to claim 3, in which said rotary drum (DR) rotates three times during one field period of said field signal so that twelve parallel video and audio tracks (A1, B1, ...) are formed on said record tape (T) by said four recording heads (R(A), R(B), R(C), R(D)) in a recording mode of PAL television signal.

5. The apparatus according to claim 4, in which said twelve tracks are scanned by said eight reproducing heads (P(A1), P(B1), ... P(C2), P(D2)) within two rotations of said rotary drum (DR).

**6.** The apparatus according to claim 3, in which said rotary drum (DR) rotates two and a half times during one field period of said field signal so that ten parallel tracks can be formed to record one field video and audio signals of NTSC television signal.

**7.** The apparatus according to claim 6, in which said eight reproducing heads (P(A1), P(B1), ... P(C2), P(D2)) are used for reproducing said ten tracks within a time less than said one field period.

**Patentansprüche**

**1.** Gerät zur Wiedergabe von Video- und Audiosignalen, die digital in aufeinanderfolgenden parallelen Spuren (A1, B1,...) auf einem Aufzeichnungsband (T) aufgezeichnet sind, welches mit einer vorgegebenen Geschwindigkeit in einer Richtung (t) in einem Winkel zur Richtung längs der Spuren (A1, B1, ...) transportiert wird, wobei das Gerät aufweist:

(a) eine Drehtrommel (DR);
(b) eine erste Übertragungseinrichtung, die auf der Drehtrommel (DR) befestigt ist, um die Video- und Audiosignale in einer digitalen Form auf dem Aufzeichnungsband (T) aufzuzeichnen, wobei die erste Übertragungseinrichtung zwei Aufzeichnungskopfpaare (R(A), R(B); R(C), R(D)) besitzt, wobei die Paare an einer gegenüberliegenden Position zueinander auf der Drehtrommel (DR) befestigt sind, so daß ein Teilbildsignal der Video- und Audiosignale durch mehrere parallele Spuren gebildet ist;
(c) ein Bimorph-Blattpaar (BM1, BM2), wobei jedes an einer gegenüberliegenden Position auf der Drehtrommel (DR) befestigt ist; und
(d) eine zweite Übertragungseinrichtung, um die parallelen Spuren (A1, B1, ...) abzutasten, wobei die zweite Übertragungseinrichtung eine gerade Anzahl von Wiedergabekopfpaaren (P(A1), P(B1); ...) besitzt, die auf den Bimorph-Blättern (BM1, BM2) befestigt sind, wobei die Anzahl der Wiedergabekopfpaare (P(A1), P(B1); ...) größer als die Anzahl der Aufzeichnungskopfpaare (R(A), R(B); R(C), R(D)) ist,

**dadurch gekennzeichnet, daß**

eine erste Hälfte der Wiedergabekopfpaare (P(A1), P(B1); P(C2), P(D2)) auf einem der Bimorph-Blätter (BM1) und eine zweite Hälfte der Wiedergabekopfpaare auf dem anderen der Bimorph-Blätter (BM2) befestigt ist, so daß verschiedene Wiedergabeköpfe (P(A1), P(B1), ...), die auf dem gleichen Bimorph-Blatt befestigt sind, verschiedene parallele Spuren (A1, B1, ...) abtasten, wenn die Bandgeschwindigkeit (t) des Wiedergabemodus die gleiche ist wie beim Aufzeichnungsmodus,
alle Wiedergabekopfpaare (P(A1), P(B1); ...) durch das Bimorph-Blattpaar (BM1, BM2) in einer Richtung quer zur Richtung (h) längs der Spuren (A1, B1, ...) abgelenkt werden können, wenn die Bandgeschwindigkeit (t) des Wiedergabemodus von der des Aufzeichnungsmodus unterschiedlich ist.

**2.** Gerät nach Anspruch 1, bei dem jedes Aufzeichnungskopfpaar zwei Aufzeichnungsköpfe (R(A), R(B); R(C), R(D)) besitzt.

**3.** Gerät nach Anspruch 1 oder 2, bei dem eine jede Hälfte der Wiedergabekopfpaare vier Wiedergabeköpfe (P(A1), ... P(D2); P(C1), ... P(B2)) besitzt.

**4.** Gerät nach Anspruch 3, bei dem die Drehtrommel (DR) dreimal während einer Teilbildperiode des Teilbildsignals dreht, so daß zwölf parallele Video- und Audiospuren (A1, B1, ...) auf dem Aufzeichnungsband (T) durch die vier Aufzeichnungsköpfe (R(A), R(B), R(C), R(D)) in einem Aufzeichnungsmodus des PAL-Fernsehsignals gebildet sind.

**5.** Gerät nach Anspruch 4, bei dem die zwölf Spuren durch acht Wiedergabeköpfe (P(A1), P(B1), ... P(C2), P(D2)) innerhalb von zwei Umdrehungen der Drehtrommel (DR) abgetastet werden.

**6.** Gerät nach Anspruch 3, bei dem die Drehtrommel (DR) zweieinhalbmal während einer Teilbildperiode des Teilbildsignals dreht, so daß zehn parallele Spuren gebildet werden können, um ein Teilbild-Video- und Audiosignal des NTSC-Fernsehsignals aufzuzeichnen.

**7.** Gerät nach Anspruch 6, bei dem acht Wiedergabeköpfe (P(A1), P(B1), ... P(C2), P(D2)) verwendet werden, um die zehn Spuren innerhalb einer Zeit wiederzugeben, die kleiner ist als die eine Teilbildperiode.

**Revendications**

**1.** Un appareil de reproduction de signaux vidéo et audio enregistrés de façon numérique dans des pistes parallèles successives (A1, B1, ...) sur une bande d'enregistrement (T), pendant que cette dernière est avancée à une vitesse prédéterminée dans une direction (t) qui fait un angle par rapport à la direction longitudinale des pistes (A1, B1, ...), cet appareil comprenant :

(a) un tambour tournant (DR);
(b) des premiers moyens transducteurs montés sur le tambour tournant (DR) pour enregistrer les signaux vidéo et audio sous une forme numérique sur la bande d'enregistrement (T), ces premiers moyens transducteurs comprenant deux paires de têtes d'enregistrement (R(A), R(B); R(C), R(D)), ces paires étant montées de façon mutuellement opposée sur le tambour tournant (DR), de façon qu'un signal d'une trame des signaux vidéo et audio soit formé par un ensemble de pistes parallèles;

(c) une paire de lames bimorphes (BM1, BM2), qui sont respectivement montées dans des positions opposées sur le tambour tournant (DR); et

(d) des seconds moyens transducteurs pour balayer les pistes parallèles (A1, B1, ...), ces seconds moyens transducteurs comprenant un nombre pair de paires de têtes de reproduction (P(A1), P(B1); ...), montées sur les lames bimorphes (BM1, BM2), le nombre de ces paires de têtes de reproduction (P(A1), P(B1); ...) étant supérieur au nombre de paires de têtes d'enregistrement (R(A), R(B); R(C), R(D)),

caractérisé en ce que

une première moitié des paires de têtes de reproduction (P(A1), P(B1), P(C2), P(D2)) est montée sur l'une des lames bimorphes (BM1) et une seconde moitié des paires de têtes de reproduction est montée sur l'autre lame bimorphe (BM2), de façon que des têtes de reproduction différentes (P(A1), P(B1); ...) qui sont montées sur la même lame bimorphe balaient des pistes parallèles différentes (A1, B1, ...), lorsque la vitesse de la bande (T) dans le mode de reproduction est la même que dans le mode d'enregistrement, et

toutes les paires de têtes de reproduction (P(A1), P(B1); ...) peuvent être déviées par la paire de lames bimorphes (BM1, BM2) dans une direction transversale par rapport à la direction (h) alignée avec les pistes (A1, B1, ...), lorsque la vitesse de la bande (T) dans le mode de reproduction diffère de celle du mode d'enregistrement.

2. L'appareil selon la revendication 1, dans lequel chacune des paires de têtes d'enregistrement comprend deux têtes d'enregistrement (R(A), R(B); R(C), R(D)).

3. L'appareil selon les revendications 1 ou 2, dans lequel chacune des moitiés des paires de têtes de reproduction comprend quatre têtes de reproduction (P(A1), ... P(D2); P(C1), ... P(DB2)).

4. L'appareil selon la revendication 3, dans lequel le tambour tournant (DR) tourne trois fois pendant une période de trame du signal de trame, de façon que douze pistes vidéo et audio parallèles (A1, B1, ...) soient formées sur la bande d'enregistrement (T) par les quatre têtes d'enregistrement (R(A), R(B), R(C), R(D)), dans un mode d'enregistrement d'un signal de télévision PAL.

5. L'appareil selon la revendication 4, dans lequel les douze pistes sont balayées par les huit têtes de reproduction (P(A1), P(B1), ... P(C2), P(D2)) en deux révolutions du tambour tournant (DR).

6. L'appareil selon la revendication 3, dans lequel le tambour tournant (DR) tourne deux fois et demi pendant une période de trame du signal de trame, de façon que dix pistes parallèles puissent être formées pour enregistrer les signaux vidéo et audio d'une trame d'un signal de télévision NTSC.

7. L'appareil selon la revendication 6, dans lequel les huit têtes de reproduction (P(A1), P(B1), ... P(C2), P(D2)) sont utilisées pour reproduire les dix pistes en un temps inférieur à la période de trame.

# FIG. 1

# FIG. 2

FIG. 3

FIG. 4

FIG. 5    1/150 Sec.=6.6 mSec.